(19) Europäisches Patentamt
European Patent Office
Office européen des brevets

(11) **EP 4 257 641 A1**

## (12) EUROPEAN PATENT APPLICATION
published in accordance with Art. 153(4) EPC

(43) Date of publication:
**11.10.2023 Bulletin 2023/41**

(21) Application number: **21900624.4**

(22) Date of filing: **01.12.2021**

(51) International Patent Classification (IPC):
**C08L 101/00** (2006.01)  **C09K 5/14** (2006.01)
**C08K 3/38** (2006.01)

(52) Cooperative Patent Classification (CPC):
**C08K 3/38; C08L 101/00; C09K 5/14**

(86) International application number:
**PCT/JP2021/044055**

(87) International publication number:
**WO 2022/118873 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.12.2020 JP 2020201787**

(71) Applicant: **Sumitomo Bakelite Co.Ltd.**
**Shinagawa-ku**
**Tokyo 140-0002 (JP)**

(72) Inventor: **KAGAWA Mika**
**Tokyo 140-0002 (JP)**

(74) Representative: **Ter Meer Steinmeister & Partner**
**Patentanwälte mbB**
**Nymphenburger Straße 4**
**80335 München (DE)**

## (54) THERMALLY-CONDUCTIVE RESIN COMPOSITION AND MOLDED ARTICLE

(57) Provided is a thermally-conductive resin composition containing a thermosetting resin and boron nitride particles, in which, in a case where a void fraction of the boron nitride particles relative to a compression pressure is measured, a void fraction at a compression pressure of 4 MPa is 30% or more and 60% or less, and a void fraction at a pressure of 8 MPa is 20% or more and 50% or less.

EP 4 257 641 A1

**Description**

TECHNICAL FIELD

The present invention relates to a thermally-conductive resin composition and a molded article. More specifically, the present invention relates to a resin composition having excellent thermal conductivity, and a molded article obtained by curing the resin composition.

BACKGROUND ART

With the progress of miniaturization, large capacity, high performance, and the like of electronic devices using semiconductors, the amount of heat generated from the semiconductor mounted at high density has been increased. For example, for a stable operation of semiconductor devices to control central processing units of personal computers and motors of electric vehicles, heat sinks and radiating fins have been essential for heat dissipation, and materials which are compatible with both insulating properties and thermal conductivity are required as members for connecting semiconductor devices and heat sinks.

In addition, in general, organic materials have been widely used for insulating materials such as printed circuit boards on which the semiconductor devices and the like are mounted. Although these organic materials have high insulating properties, the organic materials have low thermal conductivity, and do not greatly contribute to the heat dissipation of the semiconductor devices and the like. On the other hand, inorganic materials such as inorganic ceramic may be used for the heat dissipation of the semiconductor devices and the like. Although these inorganic materials have high thermal conductivity, the insulating properties of the inorganic materials are not sufficient compared to the organic materials, and thus there is a demand for a material which can achieve both high insulating properties and high thermal conductivity.

In connection with the above-described demand, various materials obtained by compounding a resin with an inorganic filler having high thermal conductivity have been studied. For example, in Patent Document 1, as an inorganic filler, among inorganic particles, boron nitride particles exhibiting particularly high thermal conductivity are highly filled in a resin component to improve the thermal conductivity and electrical insulating properties of the resin composition. In Patent Document 1, it is proposed that, by using hexagonal boron nitride powder having a specific particle size and particle size distribution as the boron nitride particles, electrical insulating properties and thermal conductivity in a thickness direction of the obtained resin composition are improved.

RELATED DOCUMENT

PATENT DOCUMENT

[Patent Document 1] Japanese Unexamined Patent Publication No. 2016-108457

SUMMARY OF THE INVENTION

TECHNICAL PROBLEM

However, in the method as disclosed in Patent Document 1, since it requires special equipment and complicated manufacturing process to control the particle size of the boron nitride, it is disadvantageous in terms of productivity and cost.

In addition, in general, it is considered that, in order to improve the thermal conductivity of the thermally-conductive resin material, a content of inorganic fillers is increased, but in a case where the content of the inorganic fillers is increased, voids are likely to occur along the inorganic fillers in the thermally-conductive resin material, and the thermal conductivity and electrical insulating properties of the thermally-conductive resin material in the thickness direction are lowered. It is considered that the voids can be removed by increasing a press pressure in a pressing step in a case of producing the thermally-conductive resin material, but in a case where the press pressure is increased, a contact stress of the boron nitride aggregates responsible for the thermal conductivity of the thermally-conductive resin material is increased, and the boron nitride aggregates are deformed or collapsed. As a result, the thermal conductivity of the thermally-conductive resin material in the thickness direction is lowered.

SOLUTION TO PROBLEM

The present invention has been made to solve the above-described problems, and an object of the present invention is to provide a thermally-conductive resin composition with which a molded article having excellent thermal conductivity and electrical insulating properties is obtained.

According to the present invention, there is provided a thermally-conductive resin composition containing a thermosetting resin and boron nitride particles, in which, in a case where a void fraction of the boron nitride particles relative to a compression pressure is measured, a void fraction at a compression pressure of 4 MPa is 30% or more and 60% or less, and a void fraction at a pressure of 8 MPa is 20% or more and 50% or less.

In addition, according to the present invention, there is provided a molded article formed from the above-described thermally-conductive resin composition.

ADVANTAGEOUS EFFECTS OF INVENTION

According to the present invention, there is provided a thermally-conductive resin composition with which a molded article having excellent thermal conductivity and electrical insulating properties is obtained.

DESCRIPTION OF EMBODIMENTS

Hereinafter, embodiments of the present invention will be described.

The thermally-conductive resin composition (hereinafter, also referred to as "resin composition") according to the embodiment of the present invention contains a thermosetting resin and boron nitride particles. In the boron nitride particles used in the present embodiment, in a case where a void fraction of the boron nitride particles relative to a compression pressure is measured, a void fraction at a compression pressure of 4 MPa is 30% or more and 60% or less, and a void fraction at a pressure of 8 MPa is 20% or more and 50% or less. In one embodiment, the void fraction of the boron nitride particles at the compression pressure of 4 MPa is preferably 35% or more and 55% or less. In addition, in one embodiment, the void fraction of the boron nitride particles at the compression pressure of 8 MPa is preferably 20% or more and 45% or less, and more preferably 20% or more and 40% or less. In a molded article of the resin composition containing the boron nitride particles in which the void fractions in a case where the compression pressure is 4 MPa and 8 MPa are respectively within the above-described ranges, the molded article has a good balance of thermal conductivity and electrical insulating properties.

Here, the void fraction of the boron nitride particles refers to a proportion of a volume of voids to an apparent volume of the boron nitride particles. The apparent volume is a volume of the boron nitride particles, including the voids between the boron nitride particles. The volume of the boron nitride particles themselves, that is, the void-free volume of the boron nitride particles can be obtained from a true density of the boron nitride particles used. The measurement of the void fraction relative to the compression pressure, in other words, the void fraction of the boron nitride particles in a case where a specific compression pressure is applied to the boron nitride particles can be measured by the following method. First, a cylindrical container having a known volume is charged with weighed boron nitride particles having a known true density. Using a height of the boron nitride particles as an initial point, a predetermined pressure (compression pressure) is applied from above to the entire cylinder area. From the height of the boron nitride particles after applying a predetermined compression pressure, the volume of the boron nitride particles at the time of compression is obtained to calculate the void fraction.

In boron nitride particles of a preferred embodiment, in a case where a straight line of the void fraction of the boron nitride particles relative to the compression pressure is created by measuring the void fraction of the boron nitride particles relative to the compression pressure, a slope of the straight line is -5.0 or more and -2.5 or less. In a further preferred embodiment, the slope of the straight line of the void fraction of the boron nitride particles relative to the compression pressure is -5.0 or more and -3.0 or less. In a molded article of the resin composition containing the boron nitride particles in which the above-described slope of the straight line is within the above-described range, the molded article has a good balance of thermal conductivity and electrical insulating properties.

It is preferable that the boron nitride particles contain primary particles and aggregates including the primary particles. It is preferable that the boron nitride particles contain thermally-sintered agglomerated boron nitride particles formed by aggregating and sintering scale-like boron nitride. Such particles can be formed, for example, by aggregating scale-like boron nitride using a spray drying method or the like, and then firing the aggregates. A firing temperature is, for example, 1200°C to 2500°C.

The decrease in void fraction due to the application of compression pressure indicates that the boron nitride aggregates are destroyed by the compression pressure and the voids in the aggregates are reduced, that the aggregates are deformed and voids existing between the aggregates are reduced, or that the aggregates and/or the primary particles are densely packed to reduce voids which exist between the particles. In addition, a smaller void fraction after compression means that the destruction and deformation of the aggregates of the boron nitride particles or the change in packing properties of the aggregates or the primary particles is larger. The boron nitride particles used in the thermally-conductive resin composition according to the embodiment of the present invention have the specific compression behavior described above. In such a resin composition containing boron nitride particles and a thermosetting resin, in a case where the resin composition is heat-compressed and molded, the thermosetting resin penetrates the voids in the aggregates of the boron nitride particles, or in the voids between the aggregates or the primary particles. As a result, good electrical insulating properties can be achieved without a reduction in thermal conductivity.

With regard to the boron nitride particles used in the thermally-conductive resin composition according to the embodiment of the present invention, by adjusting aspects such as a particle size, a particle size distribution, an aspect ratio, and a shape of the primary particles of the boron nitride, constituting the boron nitride particles; aspects such as a particle size, a particle size distribution, and a shape of the aggregates including the primary particles; mixing of primary particles/aggregates/thermally-sintered aggregates and a mixing proportion thereof; the type of the boron nitride; and the like, it can be controlled to have the compression behavior described above.

A content of the boron nitride particles in the resin composition according to the embodiment of the present invention is 40 volume% or more and 75 volume% or less, preferably 45 volume% or more and 65 volume% or less with respect to the total solid content of the resin composition. In a case where the content of the boron nitride particles is more than 75 volume%, the voids are likely to occur in the resin composition, which may result in defective molding of the resin composition. On the other hand, in a case where the content of the boron nitride particles is less than 40 volume%, the obtained resin composition has insufficient thermal conductivity.

The thermosetting resin used in the resin composition according to the embodiment of the present invention is not particularly limited, and known thermosetting resins can be used. Examples of the thermosetting resin include epoxy resins such as a cresol novolac-type epoxy resin, an epoxy resin having a dicyclopentadiene skeleton, an epoxy resin having a biphenyl skeleton, an epoxy resin having an adamantane skeleton, an epoxy resin having a phenol aralkyl skeleton, an epoxy resin having a biphenyl aralkyl skeleton, an epoxy resin having a naphthalene aralkyl skeleton, a bisphenol A-type epoxy resin, a bisphenol F-type epoxy resin, a phenol novolac-type epoxy resin, an alicyclic aliphatic epoxy resin, and a glycidyl-aminophenol-based epoxy resin, and cyanate resins. These may be used alone or in combination of two or more.

A content of the thermosetting resin in the resin composition according to the embodiment of the present invention is 25 volume% or more and 60 volume% or less, preferably 35 volume% or more and 55 volume% or less with respect to the total solid content of the resin composition. In a case where the content of the thermosetting resin is more than 60 volume%, a resin composition having a desired thermal conductivity cannot be obtained. On the other hand, in a case where the content of the thermosetting resin is less than 25 volume%, the voids are likely to occur in the resin composition, and the thermal conductivity or electrical insulating properties of the resin composition may be lowered.

The resin composition according to the embodiment of the present invention can contain a curing agent to cure the thermosetting resin. The curing agent is not particularly limited, and a known curing agent may be appropriately selected according to the type of the thermosetting resin. Examples of the curing agent include alicyclic acid anhydrides such as methyltetrahydrophthalic anhydride, methylhexahydrophthalic anhydride, and nadic anhydride; aliphatic acid anhydrides such as dodecenyl succinic anhydride; aromatic acid anhydrides such as phthalic anhydride and trimellitic anhydride; organic dihydrazides such as dicyandiamide and adipic acid dihydrazide; tris(dimethylaminomethyl)phenol; dimethylbenzylamine; 1,8-diazabicyclo(5,4,0)undecene and derivatives thereof; and imidazoles such as 2-methylimidazole, 2-ethyl-4-methylimidazole, and 2-phenylimidazole. These may be used alone or in combination of two or more.

A blending amount of the curing agent in the resin composition according to the embodiment of the present invention may be appropriately adjusted according to the type of the thermosetting resin used or the type of the type of the curing agent, and the blending amount thereof is 0.1 parts by mass or more and 200 parts by mass or less with respect to 100 parts by mass of the thermosetting resin.

From the viewpoint of improving adhesive strength at an interface between the thermosetting resin and the boron nitride particles, the resin composition according to the embodiment of the present invention can contain a coupling agent. The coupling agent is not particularly limited, and a known coupling agent may be appropriately selected according to the thermosetting resin. Examples of the coupling agent include γ-glycidoxypropyltrimethoxysilane, N-β(aminoethyl)γ-aminopropyltriethoxysilane, N-phenyl-γ-aminopropyltrimethoxysilane, and γ-mercaptopropyltrimethoxysilane. These may be used alone or in combination of two or more.

A blending amount of the coupling agent in the resin composition according to the embodiment of the present invention may be appropriately adjusted according to the type of the thermosetting resin used or the type of the type of the coupling agent, and the blending amount thereof is 0.01 mass% or more and 5 mass% or less with respect to 100 parts by mass of the thermosetting resin.

From the viewpoint of adjusting the viscosity of the composition, the resin composition according to the embodiment of the present invention can contain a solvent. The solvent is not particularly limited, and a known solvent may be appropriately selected according to the thermosetting resin or the type of inorganic filler to be used. Examples of the solvent include toluene and methyl ethyl ketone. These may be used alone or in combination of two or more.

A blending amount of the solvent in the resin composition according to the embodiment of the present invention is not particularly limited as long as it is an amount which allows kneading, and in general, the blending amount thereof is 40 parts by mass or more and 85 parts by mass or less with respect to 100 parts by mass of the total of the thermosetting resin and the boron nitride particles.

A method for producing the resin composition according to the embodiment of the present invention, containing the constituent components as described above, is not particularly limited, and can be carried out according to a known method. For example, the resin composition according to the embodiment of the present invention can be produced by the following method.

First, a predetermined amount of a thermosetting resin and a necessary amount of a curing agent for curing the thermosetting resin are mixed. Next, a solvent is added to the mixture, and then boron nitride particles are pre-mixed. In a case where the viscosity of the resin composition is low, the solvent may not be added. Next, the pre-mixture is kneaded using a triple roll, a kneader, or the like to obtain a resin composition. In a case where a coupling agent is added to the resin composition, the coupling agent may be added before the kneading step.

In one embodiment, a molded article can be produced from the above-described resin composition.

The molded article can be obtained curing the above-described resin composition by heat treatment. More specifically, the molded article can be obtained by applying the resin composition onto a substrate to form a coating layer having an arbitrary thickness, and curing the coating layer by heating. By adjusting the thickness of the coating layer, it is possible to obtain a plate-shaped, a sheet-shaped, or a thin film-shaped molded article. As conditions for the heat treatment, for example, a heating temperature can be 120°C to 250°C, and a treatment time can be 10 minutes to 300 minutes. In addition, the heat treatment may be performed in one stage or in multiple stages of two or more stages.

The molded article according to the embodiment of the present invention is produced by molding the resin composition under pressure and heat. In the molded article according to the embodiment of the present invention, since the resin composition containing the boron nitride particles having the above-described compression behavior is used, even in a case where the resin composition is cured while being pressurized, the obtained cured product has good thermal conductivity and electrical insulating properties.

The molded article formed from the thermally-conductive resin composition according to the embodiment of the present invention can be provided in a form of a sheet, and for example, is used as a heat dissipation member for electronic devices. For example, a thermally-conductive sheet obtained from the thermally-conductive resin composition according to the embodiment of the present invention is placed between a heat generating element such as a semiconductor chip and a substrate such as a lead frame or a wiring board on which the heat generating element is mounted, or between the substrate and a heat dissipation member such as a heat sink, and can function as a thermally conductive member. As a result, the heat generated from the above-described heat generating element can be effectively dissipated to the outside of the semiconductor device while maintaining the insulating properties of the semiconductor device.

The embodiments of the present invention have been described above, but these are examples of the present invention and various configurations other than the above can be adopted.

EXAMPLES

Hereinafter, the present invention will be described with reference to Examples and Comparative Examples, but the present invention is not limited thereto.

(Production of boron nitride particles)

Boron nitride particles 1 to 5 were produced by the following methods.

(Production of boron nitride particles 1)

Boron carbide powder (particle size: 44 $\mu$m or less) was placed in a crucible, and fired (nitrided) at 2000°C for 10 hours in a nitrogen atmosphere while maintaining the pressure inside the furnace. A reduced pressure treatment was performed at a furnace temperature of 1800°C or higher and a furnace pressure of 100 kPa. Boron trioxide was mixed therewith in a mixer, and the obtained composite particles were fired at 2000°C in a nitrogen atmosphere, thereby producing boron nitride particles 1.

(Production of boron nitride particles 2)

To a mixed powder obtained by mixing 65 parts by mass of boron nitride powder and 35 parts by mass of boron oxide, boron carbide and a PVA aqueous solution were further added, and mixed for 2 hours to obtain a slurry. The slurry was placed in a mold, pressurized, and dried at 300°C for 6 hours to obtain a molded article. Next, the obtained molded article was fired at 2000°C for 6 hours in a nitrogen atmosphere, thereby producing boron nitride particles 2.

(Production of boron nitride particles 3)

A mixed powder obtained by mixing melamine borate and scale-like boron nitride powder (average length size: 15 $\mu$m) was added to an ammonium polyacrylate aqueous solution, and mixed for 2 hours to prepare a slurry for spraying. Next, the slurry was supplied to a spray granulator and sprayed under conditions of an atomizer rotation speed 15,000 rpm, a temperature of 200°C, and a slurry supply rate of 5 ml/min to produce composite particles. Next, the obtained composite particles were fired at 2000°C for 6 hours in a nitrogen atmosphere, thereby producing boron nitride particles 3.

(Production of boron nitride particles 4)

A mixed powder obtained by mixing melamine borate and scale-like boron nitride powder (average length size: 15 $\mu$m) was added to an ammonium polyacrylate aqueous solution, and mixed for 2 hours to prepare a slurry for spraying. Next, the slurry was dried at 300°C for 6 hours to produce primary particles. Next, the obtained primary particles were fired at 2000°C for 6 hours in a nitrogen atmosphere, thereby producing boron nitride particles 4.

(Production of boron nitride particles 5)

65 parts by weight of fine powder of hexagonal boron nitride (specific surface area: 50 m$^2$/g) and 40 parts by weight of coarse powder of hexagonal boron nitride (specific surface area: 4 m$^2$/g) were mixed and granulated into spherical shapes, and the granules were brought into contact with a graphite molded article to obtain a molded article. Next, the obtained molded article was sintered at 2000°C for 6 hours in a nitrogen atmosphere, thereby producing boron nitride particles 5.

(Physical properties of boron nitride particles)

(Average particle size D50)

An average particle size D50 of each of the mixtures (Examples 1 to 3) of the boron nitride particles of the types and blending amounts shown in Table 1 and the boron nitride particles (Comparative Examples 1 to 4) of the types shown in Table 1 was measured by a laser diffraction scattering method. Here, the average particle size D50 is a particle size (median diameter) at an integrated value of 50% in the particle size distribution (volume basis) according to the laser diffraction scattering method. The results are shown in Table 1.

(Compression behavior of boron nitride particles)

(1. Void fraction at compression pressure of 4 MPa and 8 MPa)

Each of the mixtures (Examples 1 to 3) of the boron nitride particles of the types and blending amounts shown in Table 1 and the boron nitride particles (Comparative Examples 1 to 4) of the types shown in Table 1 was charged into a cylindrical container with a diameter of 8 mm with 10 g of boron nitride particles having a true density of 2.27 g/cm$^3$. Using a height of the boron nitride particles as an initial point, a predetermined pressure was applied from above to the entire cylinder area. From the height of the boron nitride particles after applying the compression pressures of 4.0 MPa and 8.0 MPa, the volume at the time of compression was obtained to calculate the void fraction. The results are shown in Table 1.

(2. Compression behavior)

Each of the mixtures (Examples 1 to 3) of the boron nitride particles of the types and blending amounts shown in Table 1 and the boron nitride particles (Comparative Examples 1 to 4) of the types shown in Table 1 was charged into a cylindrical container with a diameter of 8 mm with 10 g of boron nitride particles having a true density of 2.27 g/cm$^3$. Using a height of the boron nitride particles as an initial point, a predetermined pressure was applied from above to the entire cylinder area. From the height of the boron nitride particles after applying the compression pressures of 0.6 MPa, 1.2 MPa, 2.4 MPa, 3.5 MPa, 5.3 MPa, and 8.1 MPa, the volume at the time of compression was obtained to calculate the void fraction. The void fraction relative to each compression pressure was plotted to create an approximate straight line, and a slope of the obtained straight line of the void fraction relative to the compression pressure was obtained. The results are shown in Table 1.

(Preparation of resin composition)

In Examples 1 to 3 and Comparative Examples 1 to 4, each component was put into a solvent according to the components and blending amounts shown in Table 1, and mixed with a triple roll to obtain a varnish-like resin composition. Details of the components listed in Table 1 are provided below.

(Epoxy resin)

Epoxy resin 1: epoxy resin having a dicyclopentadiene skeleton (XD-1000, manufactured by Nippon Kayaku Co., Ltd.)
Epoxy resin 2: bisphenol A-type epoxy resin (828, manufactured by Mitsubishi Chemical Corporation)

(Curing agent)

Curing agent 1: trisphenylmethane-type phenol novolac resin (MEH-7500, manufactured by MEIWA PLASTIC INDUSTRIES, LTD.)

(Curing catalyst)

Curing catalyst 1: 2-phenyl-4,5-dihydroxymethylimidazole (2PHZ-PW, manufactured by SHIKOKU KASEI HOLDINGS CORPORATION)

(Production of molded article)

The obtained resin composition was heat-treated at 100°C for 30 minutes to obtain a B-stage sheet having a thickness of 400 um. Next, the sheet was cured by heat treatment at 180°C for 2 hours to obtain a molded article.

(Evaluation of thermal conductivity and electrical insulating properties of molded article)

(Measurement of thermal conductivity)

In each example and each comparative example, thermal conductivity of the above-described molded article was calculated with a thermal diffusion coefficient ($\alpha$) measured by a laser flash method (half-time method), a specific heat (Cp) measured by a DSC method, and a density ($\rho$) measured in accordance with JIS-K-6911. The unit of the thermal conductivity is W/m·K.

$$\text{Thermal conductivity } [W/m \cdot K] = \alpha \ [mm^2/s] \times Cp \ [J/kg \cdot K] \times \rho \ [g/cm^3]$$

The thermal conductivity of the molded article was evaluated from the thermal conductivity measurement results, and is shown in Table 1 according to the following evaluation standard.

<Evaluation standard>

A: 12 W/m·K or more
B: 5 W/m·K or more and less than 12 W/m·K
C: less than 5 W/m·K

(Evaluation of withstand voltage (measurement of dielectric breakdown voltage))

The molded article obtained by the above-described method was used as a test piece, and a dielectric breakdown voltage when the voltage was increased from 0 at a predetermined constant rate was measured in accordance with JIS K 6911. Specifically, a molded article having a thickness of 200 um was produced by the method described above, and cut into 50 mm squares to obtain a test piece. Further, the obtained test piece was placed in insulating oil while being sandwiched between circular electrodes. Next, using TOS9201 manufactured by KIKUSUI ELECTRONICS CORP., an AC voltage was applied to both electrodes so that the voltage was increased at a rate of 0.5 kV/sec. A voltage at which the test piece broke was taken as the dielectric breakdown voltage. Based on the measured dielectric breakdown voltage value, the withstand voltage property was evaluated according to the following evaluation standard, and shown in Table 2. As the dielectric breakdown voltage was higher, the withstand voltage was better.

A: 8.0 kV or more
B: 5.0 kV or more and less than 8.0 kV
C: less than 5.0 kV

(Evaluation of insulation reliability)

The insulation reliability of the power module was evaluated as follows for each example and each comparative example. First, a power module was produced using a substrate for a power module. An IGBT chip was used as an IC chip. A wire made of Cu was used as a bonding wire. Next, using this power module, the insulation resistance in continuous humidity was measured under the conditions of a temperature of 85°C, a humidity of 85%, and an applied DC voltage of 1.5 kV. In a case where the resistance value is $10^6$ Ω or less, it was determined that there was a failure, and Table 1 shows the time until the failure was determined. The unit is hr (hour). As the time until the failure was determined was longer, the insulation reliability was better.

[Table 1]

| <Formulation of resin composition> | | Unit | Example 1 | Example 2 | Example 3 | Comparative Example 1 | Comparative Example 2 | Comparative Example 3 | Comparative Example 4 |
|---|---|---|---|---|---|---|---|---|---|
| Epoxy compound | Epoxy compound 1 | mass% | 10.0 | 10.0 | 10.0 | 10.0 | 10.0 | 10.0 | 10.0 |
| | Epoxy compound 2 | | 10.0 | 10.0 | 10.0 | 10.0 | 10.0 | 10.0 | 10.0 |
| Curing agent | Curing agent 1 | | 5.0 | 5.0 | 5.0 | 5.0 | 5.0 | 5.0 | 5.0 |
| Curing catalyst | Curing catalyst 1 | | 0.2 | 0.2 | 0.2 | 0.2 | 0.2 | 0.2 | 0.2 |
| Boron nitride particles | Boron nitride particles 1 | | 69.8 | - | - | - | - | - | - |
| | Boron nitride particles 2 | | - | 69.8 | - | - | - | - | - |
| | Boron nitride particles 3 | | - | - | 69.8 | - | - | - | 74.8 |
| | Boron nitride particles 4 | | 5.0 | 5.0 | 5.0 | - | 74.8 | 74.8 | - |
| | Boron nitride particles 5 | | - | - | - | 74.8 | - | - | |
| <Physical properties of boron nitride particles> | | | | | | | | | |
| Average particle size D50 of boron nitride | | um | 42 | 36 | 60 | 45.0 | 60 | 22 | 91 |
| Void fraction (compression pressure of 4 MPa) | | % | 43 | 38 | 50 | 67.0 | 25 | 31 | 65 |
| Void fraction (compression pressure of 8 MPa) | | % | 32 | 25 | 28 | 63 | 12 | 12.0 | 51 |
| Slope of straight line of void fraction relative to compression pressure | | - | -3.4 | -3.9 | -5 | -1.3 | -4.4 | -6.6 | -2.6 |
| <Evaluation of resin molded article> | | | | | | | | | |
| Withstand voltage | | - | A | A | A | C | A | A | B |
| Thermal conductivity | | - | A | A | A | A | C | C | A |
| Insulation reliability | | hr | 152 | 216 | 102 | 10 | 23 | 133 | 17 |

The thermally-conductive resin compositions of Examples had high thermal conductivity and excellent electrical insulating properties.

Priority is claimed on Japanese Patent Application No. 2020-201787, filed on December 4, 2020, the disclosure of which is incorporated herein by reference.

**Claims**

1.   A thermally-conductive resin composition comprising:

   a thermosetting resin; and
   boron nitride particles,
   wherein, in a case where a void fraction of the boron nitride particles relative to a compression pressure is measured, a void fraction at a compression pressure of 4 MPa is 30% or more and 60% or less, and a void fraction at a pressure of 8 MPa is 20% or more and 50% or less.

2.   The thermally-conductive resin composition according to claim 1,
   wherein, in a case where a straight line of the void fraction of the boron nitride particles relative to the compression pressure is created by measuring the void fraction of the boron nitride particles relative to the compression pressure, a slope of the straight line is -5.0 or more and -2.5 or less.

3.   The thermally-conductive resin composition according to claim 1 or 2,
   wherein the boron nitride particles include thermally-sintered agglomerated boron nitride particles.

4.   A molded article formed from the thermally-conductive resin composition according to any one of claims 1 to 3.

5.   The molded article according to claim 4,
   wherein the molded article is plate-shaped, sheet-shaped, or thin film-shaped.

## INTERNATIONAL SEARCH REPORT

International application No.

**PCT/JP2021/044055**

### A. CLASSIFICATION OF SUBJECT MATTER

*C08L 101/00*(2006.01)i; *C09K 5/14*(2006.01)i; *C08K 3/38*(2006.01)i
FI:   C08L101/00; C08K3/38; C09K5/14

According to International Patent Classification (IPC) or to both national classification and IPC

### B. FIELDS SEARCHED

Minimum documentation searched (classification system followed by classification symbols)

C08L101/00; C09K5/14; C08K3/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-152299 A (MITSUBISHI ELECTRIC CORP) 25 August 2014 (2014-08-25) claims, paragraphs [0006], [0014], each example | 1-5 |
| X | JP 2011-176024 A (MITSUBISHI ELECTRIC CORP) 08 September 2011 (2011-09-08) claims, paragraphs [0006], [0023], [0051], each example | 1-5 |
| X | JP 2014-196403 A (MITSUBISHI ELECTRIC CORP) 16 October 2014 (2014-10-16) claims, paragraphs [0008], [0037]-[0038], examples 1-3, 5-6 | 1-5 |
| X | WO 2014/199650 A1 (MITSUBISHI ELECTRIC CORP) 18 December 2014 (2014-12-18) claims, paragraph [0007], each example | 1-5 |
| X | JP 2018-082167 A (SEKISUI CHEMICAL CO LTD) 24 May 2018 (2018-05-24) claims, paragraph [0013], each example | 1-2, 4-5 |
| X | JP 2018-082165 A (SEKISUI CHEMICAL CO LTD) 24 May 2018 (2018-05-24) claims, paragraph [0013], each example | 1-2, 4-5 |
| A | JP 2020-169230 A (SUMITOMO BAKELITE CO) 15 October 2020 (2020-10-15) | 1-5 |

☐ Further documents are listed in the continuation of Box C.    ☑ See patent family annex.

* Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/044055**

| Patent document cited in search report | | | Publication date (day/month/year) | Patent family member(s) | Publication date (day/month/year) |
|---|---|---|---|---|---|
| JP | 2014-152299 | A | 25 August 2014 | (Family: none) | |
| JP | 2011-176024 | A | 08 September 2011 | US 2013/0012621 A1 claims, paragraphs [0008], [0046], [0118], each example WO 2011/104996 A1 CN 102770956 A | |
| JP | 2014-196403 | A | 16 October 2014 | (Family: none) | |
| WO | 2014/199650 | A1 | 18 December 2014 | US 2016/0115343 A1 claims, paragraphs [0010]-[001 2], each example CN 105308125 A | |
| JP | 2018-082167 | A | 24 May 2018 | (Family: none) | |
| JP | 2018-082165 | A | 24 May 2018 | (Family: none) | |
| JP | 2020-169230 | A | 15 October 2020 | (Family: none) | |

Form PCT/ISA/210 (patent family annex) (January 2015)

**EP 4 257 641 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016108457 A
- JP 2020201787 A